(19) **Europäisches Patentamt / European Patent Office / Office européen des brevets**

(11) **EP 4 010 745 B1**

(12) **EUROPEAN PATENT SPECIFICATION**

(45) Date of publication and mention
of the grant of the patent:
**19.02.2025 Bulletin 2025/08**

(21) Application number: **20851948.8**

(22) Date of filing: **13.08.2020**

(51) International Patent Classification (IPC):
**G02B 13/00** *(2006.01)* **G02B 17/08** *(2006.01)*

(52) Cooperative Patent Classification (CPC):
**G02B 17/0804; G02B 13/0055; G02B 13/009;
G02B 17/0856; G02B 17/086**

(86) International application number:
**PCT/CN2020/108763**

(87) International publication number:
**WO 2021/027859 (18.02.2021 Gazette 2021/07)**

(54) **COMPACT CATADIOPTRIC OPTICAL SYSTEM FOR MOBILE PHONES**

**KOMPAKTES KATADIOPTRISCHES OPTISCHES SYSTEM FÜR MOBILTELEFONE**

**SYSTÈME OPTIQUE CATADIOPTRIQUE COMPACT POUR TÉLÉPHONES MOBILES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2019 PCT/EP2019/071727**

(43) Date of publication of application:
**15.06.2022 Bulletin 2022/24**

(73) Proprietor: **Huawei Technologies Co., Ltd.
Longgang District
Shenzhen,
Guangdong 518129 (CN)**

(72) Inventors:
• **OJALA, Kai
02044 VTT (FI)**
• **AIKIO, Mauri
02044 VTT (FI)**

(74) Representative: **Epping - Hermann - Fischer
Patentanwaltsgesellschaft mbH
Schloßschmidstraße 5
80639 München (DE)**

(56) References cited:
| | |
|---|---|
| EP-B1- 2 443 699 | WO-A1-2018/066313 |
| CN-A- 102 707 413 | CN-A- 104 199 180 |
| JP-A- H06 273 673 | US-A1- 2003 206 338 |
| US-A1- 2015 177 496 | US-A1- 2016 187 631 |
| US-A1- 2016 306 149 | US-A1- 2016 306 149 |
| US-A1- 2018 180 862 | US-A1- 2018 180 862 |
| US-A1- 2018 252 905 | US-B1- 9 933 604 |

# EP 4 010 745 B1

## Description

<u>TECHNICAL FIELD</u>

The disclosure relates generally to light ray path folding optical systems, and in particular to a modified and movable Schmidt-Cassegrain optical system for use in an imaging system of an electronic device, more particularly in a compact telephoto camera objective for mobile phones, implementing optical image stabilization and/or autofocus capabilities.

<u>BACKGROUND</u>

Size requirements of primary cameras for flat form-factor handheld smart devices are becoming more and more restricted with the continuous decrease of device dimensions, especially their thickness ('z-height'). At the same time there is increasing demand for better quality images and higher zoom factors from such devices. The z-height itself can be reduced while increasing image quality by, for example, integrating additional telephoto sub-camera module(s) in the device. However, the maximum multiple camera zoom factor at the moment is still around 3x and the achievable equivalent focal length (based on a single-lens reflex camera) with existing mobile camera objectives is still around 80 mm.

Standard refractive telephoto camera objectives tend to be long and larger zoom factors may need folded optics. Device dimensions limit the camera lens height, so that a 10x zoom factor becomes difficult to reach with common refractive lens constructions. If the folding happens in one plane only, it may restrict the aperture diameter too.

Another problem in mobile phone cameras is the aperture size, which deepens the depth of field (DOF) in telephoto images. Small aperture in a long focal length optical system also causes diffraction blur or "smoothness" in telephoto images. In current mobile-size telephoto lenses, the diffraction may limit the resolution of the lens and the crispiness of local contrast in images with small pixel size sensors.

Limited aperture area in the folded refractive telephoto lenses also generates more noise in the image. Noise is reduced by using pixel binning or multiple simultaneous or sequential exposures for one image. Another solution for reducing the noise level is having one of sub-camera sensors or pixels as grayscale in the main camera system (e.g. by one of the cameras not having colour filters). When a grayscale image is combined with an image from a colour camera, there would be larger dynamics and less noise in the final image.

Thus, the F-number or aperture area is essential in every individual camera unit in the system to brighten the image and reduce the noise level. A camera unit with a better F-number (bigger aperture area) collects more light into the image making the signal-to-noise ratio higher.

There have been made attempts at solving some of these problems by folding the light ray path, such as by using Cassegrain double reflection-based systems as telephoto camera objective. Such a Cassegrain system comprises a parabolic primary mirror and a hyperbolic secondary mirror that reflects the light back down through a hole in the primary. By folding the light ray path, the design is made more compact. However, these systems comprising multiple mirrors and lenses are mechanically complex, with low production and assembly tolerance, and are thus expensive and difficult to implement is small-size devices. Due to the sensitive mechanical parts they are also prone to fail after extended use. Furthermore, Cassegrain systems are predominantly used in systems such as astronomical or pro-amateur consumer telescopes. As such, they are used to image stationary objects, such as astronomical objects, thereby obviating the requirement for image stabilisation. That is, since such systems are typically rigidly mounted (e.g., on a stand or tripod) the entire system can be moved to follow the object of interest. However, since optical image stabilisation (OIS) has largely become the norm in the camera systems of mobile devices, it would be advantageous to be able to implement such stabilisation in a compact system based on a Cassegrain double reflection-based system.

US20160187631A1 discloses an iris recognition lens system including a first lens and a second lens disposed on an optical axis and sequentially from an object to take an image of an iris and a pupil. A front part of the first lens includes a reflecting area in a central portion and a transmitting area in a circumferential portion. A rear part of the first lens includes a concave transmitting area in a central portion and a reflecting area in a circumferential portion. The second lens is disposed at a rear of the transmitting area in the central portion of the rear part of the first lens. A plurality of reflecting areas and a plurality of transmitting areas are provided in a single lens in order to reduce the length of the lens and increase a focal length, thereby reducing the length of the entire iris recognition lens system.

US20180252905A1 discloses a portrait lens configuration for meeting handheld device form factor constraints. First and second meniscus lenses each have a reflective surface to provide internal reflections for transmitting light toward a focal plane. A third lens is positioned between the meniscus lenses and the focal plane. The first lens includes an anterior concave surface having a reflective material extending over a portion thereof. Light received by the first meniscus lens can be transmitted therethrough. The reflective material is positioned along the anterior concave surface to receive light transmitted therethrough and reflected back from the second lens.

US9933604B1 discloses a catadioptric telephoto lens system which: receives incident light rays in a parallel path of both catoptrics and dioptrics, where some of the incident light rays go through a reflective path involving mirrors/reflective surfaces and others of the incident light rays go through a refractive path involving lenses; or receives incident light rays in a serial path of catoptrics and dioptrics, where all the incident light rays initially go through a reflective path involving mirrors/reflective surfaces and then go through a refractive path involving lenses.

SUMMARY

It is an object to provide an improved optical system for use as a compact telephoto camera objective that is suitable for mobile phones, and which overcomes or at least reduces the problems mentioned above.

The foregoing and other objects are achieved by the features of the independent claims. Further implementation forms are apparent from the dependent claims, the description and the figures.

According to a first aspect, there is provided a catadioptric optical system comprising:

a solid body of optical material, the solid body comprising

an annular entry surface;

an annular first intermediary surface located opposite to the entry surface;

a second intermediary surface being substantially continuous with the inner ring of the annular entry surface; and

an exit surface located opposite to the second intermediary surface; wherein the system further comprises a primary reflective surface and

a secondary reflective surface; wherein

the primary reflective surface and the secondary reflective surface being arranged so that a light ray entering the system through the entry surface is folded at least two times before exiting through the exit surface; and wherein

the exit surface is connected to the first intermediary surface by an inner wall extending towards the second intermediary surface, thereby defining a void inside the solid body, wherein the primary reflective surface and the secondary reflective surface are separated from the solid body and arranged as floating elements, and at least one portion of a) the primary reflective surface, b) the secondary reflective surface and c) an additional optical lens arranged within said void are configured to be moved relative to an optical axis of the system. Movement of one or more of the portions enables optical image stabilization and/or autofocus for the optical system. In an example, a movement can include a shift.

Such a catadioptric optical system with a double folding structure, i.e. a structure in which the light ray path is folded two times by means of reflection (back-forth-back light path), allows a focal length which is longer than the actual outer dimensions of the optical system, therefore enabling use in a telephoto objective lens of a mobile smartphone camera to reach longer focal length, higher zoom ratio and high performance, while keeping a compact z-height. In addition, the annular (ring) shape of the entry surface first intermediary surface enables increased aperture area in the double folding design, which enables large light gathering area and narrower depth of focus and field of view for the telephoto objective. The solid body (one-block or monobloc) design further provides simple mechanical assembly, higher manufacture tolerance, fabrication and usability robustness. The inner walls and the thereby created void in the solid body is particularly advantageous for arranging an additional lens within the optical system, therefore allowing for increased image quality without increasing the required total z-height of the system.

Relative to the optical axis of the system, one or more of the primary reflective surface or a component thereof, the secondary reflective surface or a component thereof and an additional optical lens can be shifted laterally, in parallel, or tilted, thereby enabling optical image stabilisation and/or autofocus or autofocus tuning. That is, individual groups or components of groups, or a combination of groups and/or components can be moved relative to the optical axis of the system in order to provide improved autofocus and/or enable compensation for unwanted, unintended or undesirable movement resulting from, for example, movement of the device within which the system is provided. A component of a group may comprise, for example, one or more lenses, or portions of optical material.

In a possible implementation form of the first aspect the entry surface is an annular refractive surface of revolution arranged coaxially with the optical axis of the system, enabling the system to balance optical aberrations for an increased image quality.

In an embodiment, the entry surface has an aspheric shape, allowing for more optimized correction of the spherical aberration of the primary reflective surface.

In a possible further implementation form of the first aspect the first intermediary surface is an annular, concave surface of revolution arranged coaxially with the optical axis of the system, which allows for a further optimized design of the system.

In a possible further implementation form of the first aspect the second intermediary surface is a circular, convex surface of revolution arranged coaxially with the optical axis of the system, which allows for a further optimized design of the system.

In a possible further implementation form of the first aspect the primary reflective surface is an annular, concave surface of revolution, with a curvature substantially corresponding to the curvature of the first intermediary surface, arranged coaxially with the optical axis of the system, allowing for a simple and compact structure which may be designed in accordance with specific reflection requirements.

In a possible further implementation form of the first aspect the secondary reflective surface is a circular, convex surface of revolution, with a curvature substantially corresponding to the curvature of the second intermediary surface, arranged coaxially with the optical axis of the system, allowing for a simple and compact structure which may be designed in accordance with specific reflection requirements.

In a further possible implementation form of the first aspect at least one of the first intermediary surface or the second intermediary surface is a refractive surface, enabling for balancing optical aberrations for an increased image quality.

In a further possible implementation form of the first aspect the system further comprises a circular Mangin mirror arranged after the second intermediary surface in the light ray path, the Mangin mirror comprising the secondary reflective surface and a third intermediary surface, the third intermediary surface being a convex, refractive surface of revolution, and the secondary reflective surface being a reflective coating on the rear side of the third intermediary surface with respect to the light ray path. This embodiment enables an enhanced image quality and eases the tolerance sensitivity by adding optimizable surface forms in the system. Furthermore, the added intermediary surface can be utilized as an additional degree of freedom in the performance optimization.

In an embodiment the system further comprises another, annular Mangin mirror arranged after the first intermediary surface in the light ray path, the Mangin mirror comprising the primary reflective surface and a fourth intermediary surface, the fourth intermediary surface being a concave, refractive surface of revolution, and the primary reflective surface being a reflective coating on the rear side of the fourth intermediary surface with respect to the light ray path. This embodiment further enhances the image quality and reduces tolerance sensitivity.

In a further possible implementation form of the first aspect the exit surface is a circular, refractive surface of revolution arranged coaxially with the optical axis of the system, enabling for further balancing optical aberrations for an increased image quality.

In a further possible implementation form of the first aspect both the second intermediary surface and the exit surface are annular surfaces, which allows for additional degree of freedom and adjustment options for the system.

In a further possible implementation form of the first aspect the primary reflective surface is a spherical surface, which allows for a simplified design while keeping the advantages of the resulting system.

In a further possible implementation form of the first aspect the secondary reflective surface is a hyperbolic surface, prolonging the focal length and reducing the over-corrected spherical aberration to corrected-level at the image plane, thereby allowing for further increased image quality.

In a further possible implementation form of the first aspect all the refractive surfaces of the system are aspheric surfaces of revolution to achieve best possible performance of the system.

In a further possible implementation form of the first aspect the system further comprises an additional optical lens arranged within the void, coaxially with the optical axis of the system, configured to correct spherical aberration of the system, thereby increasing the image quality while still enabling compact outer dimensions.

In one embodiment the additional optical lens is a Schmidt corrector plate, which allows for specifically advantageous correction of spherical aberrations in a catadioptric optical system.

In a further possible implementation form, the system can comprise a linear actuator. The linear actuator can be configured to adjust a position of at least one of the primary reflective surface, the secondary reflective surface and the additional optical lens. More than one such linear actuator may be provided. For example, three linear actuators may be provided spaced equally around the periphery of the system. A linear actuator can tilt the primary reflective surface, the secondary reflective surface and/or the additional optical lens at an angle relative to the optical axis of the system, and can be flexibly coupled to the system. For example, an actuating arm of the linear actuator can be flexibly coupled to the primary reflective surface, the secondary reflective surface and the additional optical lens or a component thereof.

In a further possible implementation form, a support rail configured to constrain motion of at least one of the primary reflective surface, the secondary reflective surface and the additional optical lens to a predefined path can be provided. As such, at least a portion of one of the groups or components can be flexibly coupled to a support rail to enable movement thereof along a pathway defined by the support rail.

According to an example, at least one of the primary reflective surface, the secondary reflective surface and the additional optical lens are configured to be at least one of moved laterally relative to the optical axis of the system, moved parallel to the optical axis of the system and tilted relative to the optical axis of the system. The secondary reflective surface can shift (or move) parallel to the optical axis of the system, whereby to enable autofocus or autofocus tuning for the system. The secondary reflective surface can tilt (or angularly shift) relative to the optical axis of the system, whereby to enable optical image stabilization for the system.

According to a second aspect, there is provided an electronic device comprising:

a housing;

a catadioptric optical system according to any possible implementation form of the first aspect, arranged within the housing;

wherein the housing further comprises an aperture arranged within a wall of the housing so as to allow light rays from an object enter the catadioptric optical system; and wherein

the device further comprises an image sensor arranged to be able to receive light rays exiting the catadioptric optical system.

Such an electronic device, containing the above described optical system (e.g. in the form of a telephoto objective embedded into structure of a mobile smartphone) allows for a thin form factor while still having a long focal length. The arrangement of the optical system within the housing can enable additional degrees of freedom, e.g. for adjusting the focus length.

The arrangement of the device enables the solid body of the optical system to capture, crop, restrict and convert a part of the angular incoming 3D light field (that is hitting the aperture from the scenery) to the spatial image projection on to the 2D image sensor 17 plane, thus converting ray angles to the spatial position on the image sensor 17.

In a possible implementation form of the second aspect a thickness of the solid body, defined as the maximum length of the solid body measured along the optical axis of the catadioptric optical system, is between 75% to 125% of a diagonal dimension of the image sensor, which provides a particularly advantageous design for optimized image quality.

In another, more preferred embodiment a thickness of the solid body is between 80% to 120% of the diagonal dimension of the image sensor, which provides an even more advantageous design for optimized image quality.

In a further possible implementation form of the second aspect the distance between the exit surface and the image sensor, measured along the optical axis of the catadioptric optical system, is between 80% to 120% of a diagonal dimension of the image sensor, which provides a particularly advantageous design for optimized image quality.

In another, more preferred embodiment the distance between the exit surface and the image sensor is between 87.5% to 112.5% of a diagonal dimension of the image sensor, which provides an even more advantageous design for optimized image quality.

In a further possible implementation form of the second aspect the catadioptric optical system further comprises an optical lens arranged within the void, and the distance between the exit surface and the image sensor, measured along the optical axis of the catadioptric optical system, is approximately 82% of a diagonal dimension of the image sensor, which provides a particularly advantageous design for optimized image quality.

According to a third aspect, there is provided a method for optical image stabilization in a catadioptric optical system according to any possible implementation form of the first aspect, the method comprising at least one of laterally moving at least one of the primary reflective surface, the secondary reflective surface and the additional optical lens relative to the optical axis of the system, and shifting at least one of the primary reflective surface, the secondary reflective surface and the additional optical lens parallel to the optical axis of the system, and tilting at least one of the primary reflective surface, the secondary reflective surface and the additional optical lens with respect to the optical axis of the system. The method can further comprise performing or refining an autofocus operation of the system by shifting the secondary reflective surface parallel to the optical axis of the system.

These and other aspects will be apparent from and the embodiment(s) described below.

BRIEF DESCRIPTION OF THE DRAWINGS

In the following detailed portion of the present disclosure, the aspects, embodiments and implementations will be explained, by way of example only, in more detail with reference to the example embodiments shown in the drawings, in which:

Fig. 1 shows a schematic cross-section of a catadioptric optical system in accordance with one embodiment of the first aspect;

Fig. 2 shows a schematic rotational cross-section of a catadioptric optical system in accordance with another examples useful for understand the invention;

Fig. 3 shows a schematic rotational cross-section of a catadioptric optical system in accordance with another examples useful for understand the invention;

Fig. 4 shows a schematic rotational cross-section of a catadioptric optical system in accordance with another embodiment of the first aspect;

Fig. 5 shows a schematic cross-section of a catadioptric optical system in accordance with another embodiment of the first aspect;

Fig. 6 shows a schematic cross-section of a device in accordance with one embodiment of the second aspect;

Fig. 7 shows a schematic cross-section of a device in accordance with another embodiment of the second aspect; and

Fig. 8 shows a schematic cross-section of a movable catadioptric optical system according to an example;

Fig. 9 shows a further schematic cross-section of a movable catadioptric optical system according to an example;

Fig. 10 shows a further schematic cross-section of a movable catadioptric optical system according to an example;

Fig. 11 shows a further schematic cross-section of a movable catadioptric optical system according to an example;

Fig. 12 shows a further schematic cross-section of a movable catadioptric optical system according to an example;

## DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

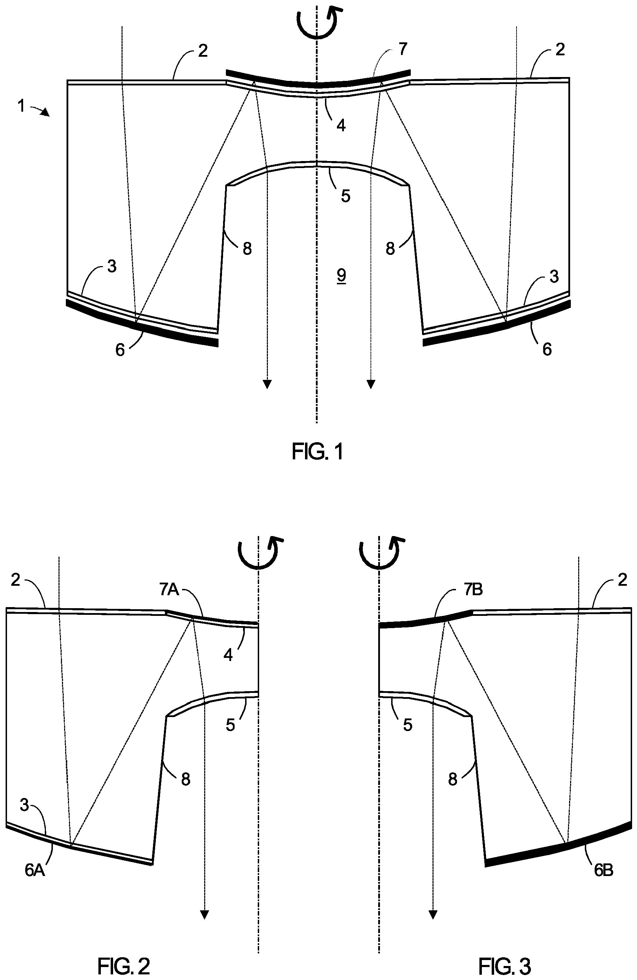

Fig. 1 shows a catadioptric optical system according to the present disclosure, wherein a catadioptric optical system is defined as a system where refraction and reflection are combined in an optical system, usually via lenses (dioptrics) and curved mirrors (catoptrics). The system according to the present disclosure represents a modified and movable Schmidt Cassecrein (MSC) that is able to cope with the demanding scale and performance requirements (resolution) in mobile devices. As will be described in more detail below, additional degrees of freedom are provided, along with the ability to generate optically stabilised image data.

The optical system comprises a solid body 1 of optical material with an annular entry surface 2, and an annular first intermediary surface 3 located opposite to the entry surface 2. In the illustrated embodiment, the entry surface 2 is an annular refractive surface of revolution arranged coaxially with the optical axis of the system, and the first intermediary surface 3 is an annular, concave surface of revolution arranged coaxially with the optical axis of the system.

The solid body 1 further comprises a second intermediary surface 4 that is substantially continuous with the inner ring of the annular entry surface 2, and an exit surface 5 located opposite to the second intermediary surface 4. In the illustrated embodiment, the second intermediary surface 4 is a circular, convex surface of revolution arranged coaxially with the optical axis of the system, and the exit surface 5 is a circular, refractive surface of revolution arranged coaxially with the optical axis of the system.

In some embodiments of the optical system at least one of the first intermediary surface 3 or the second intermediary surface 4 is a refractive surface. In the illustrated embodiment, both the first intermediary surface 3 and the second intermediary surface 4 are refractive surfaces.

In an embodiment, all the refractive surfaces of the solid body 1 are aspheric surfaces of revolution.

In another embodiment, all the refractive surfaces of the optical system are aspheric surfaces of revolution.

The system also comprises a primary reflective surface 6 and a secondary reflective surface 7. The primary reflective surface 6 and the secondary reflective surface 7 are arranged so that a light ray entering the system through the entry surface 2 is folded at least two times before exiting through the exit surface 5. In the illustrated embodiment, the primary reflective surface 6 is an annular, concave surface of revolution, with a curvature substantially corresponding to the curvature of the first intermediary surface 3, arranged coaxially with the optical axis of the system, while the secondary reflective surface 7 is a circular, convex surface of revolution, with a curvature substantially corresponding to the curvature of the second intermediary surface 4, arranged coaxially with the optical axis of the system.

In an embodiment, the primary reflective surface 6 is a spherical surface.

In an embodiment, the secondary reflective surface 7 is a hyperbolic surface.

In some embodiments, such as the one illustrated in Fig. 1, the primary reflective surface 6 and the secondary reflective surface 7 are separated from the solid body 1 and arranged as floating elements. This results in an airspace thickness between the solid body 1 and each reflective surface, which can be used as variables for performance optimization, or for adjusting the system focus. In further possible embodiments, floating element orientation i.e. decentre or tilt with respect to the solid body 1 may be utilized for camera optical image stabilization.

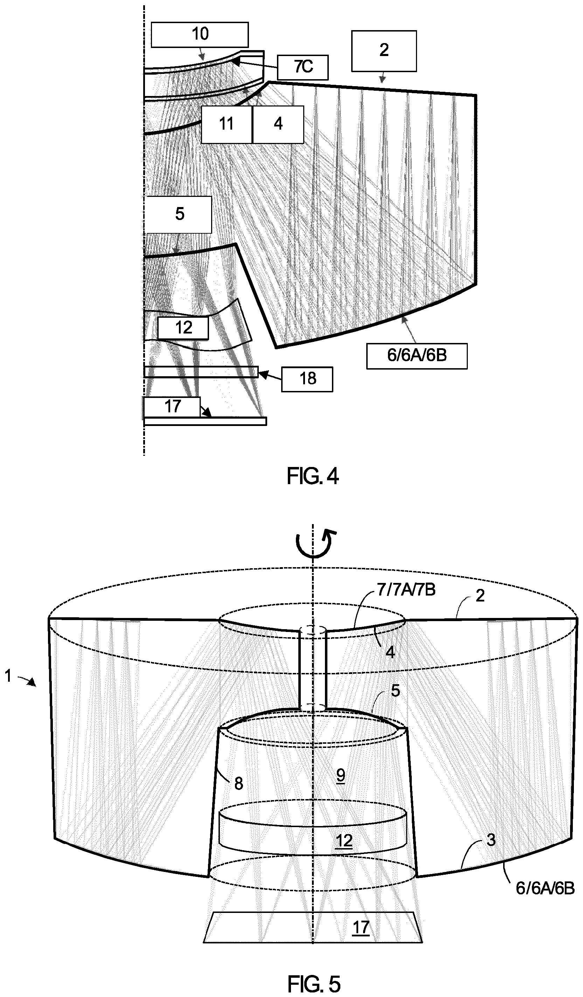

As illustrated in in Fig. 1, the exit surface 5 is connected to the first intermediary surface 3 by an inner wall 8 extending towards the second intermediary surface 4, thereby defining a void 9 inside the solid body 1. This void 9 is particularly advantageous for arranging an additional lens within the optical system without increasing the required total z-height, such as a lens 12 as illustrated on Figs. 4 to 7.

As can be seen in Fig. 1. (illustrated with dashed lines), light enters to the system through the entry surface 2, which may be an annular aspheric lens surface, and propagates (through the annular first intermediary surface 3) to the first folding reflection at the primary reflective surface 6, which is the positive primary mirror in the system. The next step (after traversing the second intermediary surface 4) is a second folding reflection at the secondary reflective surface 7, which is the negative secondary mirror. The material block of the solid body 1 ends at exit surface 5 that opens to an airspace (until the image plane).

This double folding-shape ray path between folding mirrors form a two-mirror Cassegrain telescope type optical system, which is in some way similar to a standard telephoto lens with positive and negative lens groups, replaced by mirrors. The distances between the components (surfaces) relate to focal length of the primary reflective surface and the different embodiments of the structure enable balancing other aberrations like coma, astigmatism, field curvature etc.

If one mirror in an MSC system is turned (in an angular direction) the reflected image shifts radically, whereas if a lens is turned/tilted in a typical refractive telephoto optical system, there is almost no shift of the image. Accordingly, MSC OIS is rather different than that of conventional OIS in refractive telephoto optical system systems.

According to an example, OIS and/or autofocus (AF) are implemented in an MSC system such as that described with reference to figure 1, and more generally with reference to any of the implementations described with reference to any of the figures provided herein, by way of movement of one component or group of components in the system, or by way of movement of the whole MSC system. In an example, the movement of a component, group of components or the whole system provides compensation for movement of a device within which the system is provided. For example, the compensating movement can be used to offset unwanted or unintentional movement of a mobile device being used to capture an image or set of images (e.g., in the form of a video) of a scene or object. Movement of one or more components of the system, or movement of the system as a whole can also be used (either on its own or in combination with movement to provide stabilisation) to provide AF. That is, movement of one or more components or of the whole system can be used to focus an image onto an imaging sensor of a device within which the system is implemented.

Figs. 2 and 3 show further examples useful for understand the invention of the catadioptric optical system according to the present disclosure, wherein the primary reflective surface 6 and secondary reflective surface 7 are implemented as part of the solid body 1, instead of separate parts of the optical system.

In the example illustrated on Fig. 2, the primary reflective surface 6 is a mirror film coating 6A at least partially covering the first intermediary surface 3, and the secondary reflective surface 7 is also a mirror film coating 7A, at least partially covering the second intermediary surface 4.

In the example illustrated on Fig. 3, the primary reflective surface 6 is a mirror 6B that is one and the same as the first intermediary surface 3, and the secondary reflective surface 7 is also a mirror 7B, that is one and the same as the second intermediary surface 4.

Fig. 4 shows a further embodiment of the catadioptric optical system according to the present disclosure, wherein the primary reflective surface 6 is implemented as part of the solid body 1. In one embodiment the primary reflective surface 6 is a mirror film coating 6A covering the first intermediary surface 3. In another embodiment the primary reflective surface 6 is a mirror 6B that is one and the same as the first intermediary surface 3.

However, the secondary reflective surface 7 is implemented separately, as part of a circular Mangin mirror 10 arranged after the second intermediary surface 4 in the light ray path. In optics, a Mangin mirror is a negative meniscus lens with the reflective surface on the rear side of the glass forming a curved mirror that reflects light without spherical aberration. More specifically, the spherical aberration normally produced by the simple spherical mirror surface is canceled out by the opposite spherical aberration produced by the light traveling through the negative lens. Since light passes through the glass twice, the overall system acts like a triplet lens.

The Mangin mirror 10 further comprises a third intermediary surface 11, which in the illustrated embodiment is a convex, refractive surface of revolution. The secondary reflective surface 7 in this embodiment is implemented as a reflective (mirror) coating 7C on the rear side of the third intermediary surface 11 with respect to the light ray path.

In a further possible embodiment, the primary reflective surface 6 is also implemented as part of a Mangin mirror, similarly to the embodiment described above, which enables a more superior image quality, and eases the tolerance sensitivity of the solution by added optimizable surface forms in the system.

In further possible embodiments, the optical system comprises an additional optical lens 12 arranged within the void 9, as illustrated in Figs. 4 to 7. The optical lens 12 is arranged coaxially with the optical axis of the system, configured to correct spherical aberration of the system.

In an embodiment illustrated in Fig. 4, the additional optical lens 12 is a Schmidt corrector plate. This arrangement is closest in design to the Schmidt-Cassegrain (SC) type telescope optics.

Fig. 5 shows a further embodiment of the catadioptric optical system according to the present disclosure, wherein both the second intermediary surface 4 and the exit surface 5 are annular surfaces, with a hole arranged in the solid body along the optical axis of the system. Thus, in this embodiment, all the surfaces of the solid body 1 that fold the light path or are traversed by the light path are annular surfaces. As the figure illustrates, most of the described embodiments are rotationally symmetric, with the rotational axis being the optical axis of the system.

In Figs. 4 and 5 an additional image sensor 17 is also shown, arranged to be able to receive light rays exiting the catadioptric optical system 13. In an embodiment illustrated in Fig. 4, there is arranged a sheet of protective glass 18 before the image sensor 17 in the light ray path.

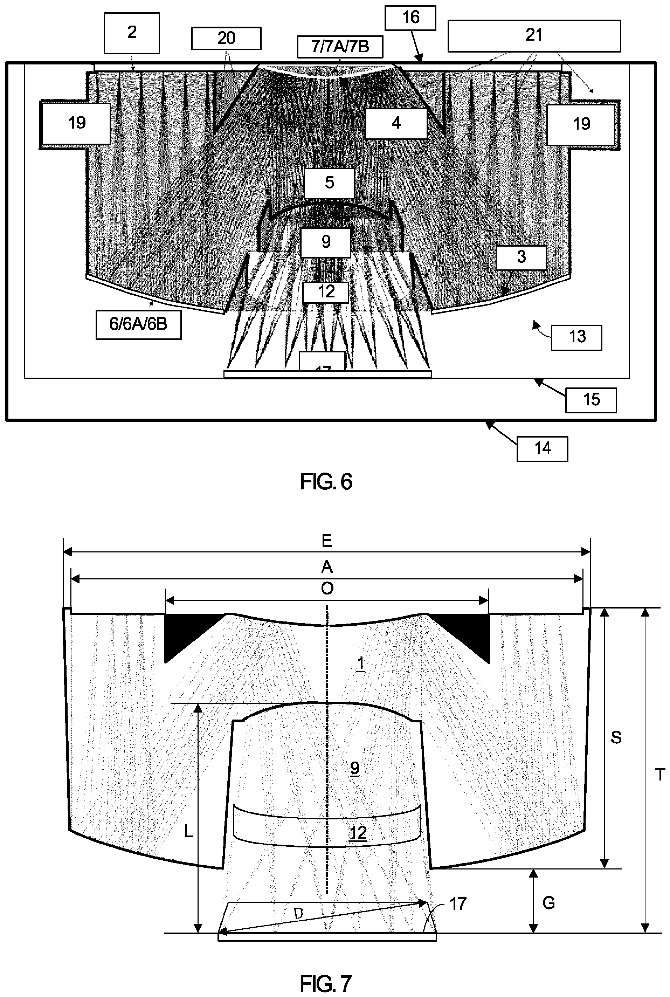

Fig. 6 shows an exemplary implementation of an electronic device 14 according to the present disclosure comprising a housing 15 and, arranged within the housing 15, a catadioptric optical system 13 according to any embodiment described above. The housing 15 further comprises an aperture 16 arranged within its wall so as to allow light rays from an object enter the catadioptric optical system 13, and the device 14 further comprises an image sensor 17 arranged to be able to receive light rays exiting the catadioptric optical system 13.

In some embodiments a sheet of protective glass 18 may be arranged before the image sensor 17 in the light ray path, as illustrated in Fig. 4.

In some embodiments the optical system may comprise an additional optical lens 12 arranged within the void 9. In a particularly advantageous embodiment this additional lens 12 is made of Zeon E48R, which is an innovative plastic (Cyclo Olefin Polymer) material primarily used for manufacturing optical parts with attributes such as low moisture absorption, good transparency and high precision molding.

In an embodiment the solid body comprises a surrounding annular mechanical step 19, and the housing 15 may comprise in its walls a circular or threaded inset corresponding to the annular step 19 to be able to hold the solid body 1 in place, and optionally allow it to move closer or further from the image sensor 17 parallel to the optical axis of the system 13. In an embodiment, the solid body can be moved with respect to the image sensor 17 in predefined steps. In another embodiment, the solid body can be moved with respect to the image sensor 17 continuously.

In a particularly advantageous embodiment, the optical material used for the solid body 1 optical Polymethyl methacrylate (PMMA, also known as acrylic, acrylic glass, or plexiglass), and the body 1 is implemented by diamond turning.

In a further embodiment the solid body further comprises baffle drilling 20 and an optional diffuse surface coating 21 (matte black paint) to reduce incident light and unwanted reflections in the system 13.

Fig. 7 shows an embodiment of the catadioptric optical system 13 within an electronic device 14 according to the present disclosure, illustrating relative dimensions of a preferred arrangement of the optical system in the device 14 with respect to the dimensions of the image sensor 17 and the distance therefrom.

In the illustrated embodiment, the diagonal dimension D of the image sensor 17 is illustrated as length of a diagonal line between two opposing corners of the image sensor 17 (since image sensors are generally square shaped, any of the diagonals can be taken as diagonal dimension). The thickness S of the solid body 1 is illustrated as the maximum length of the solid body 1 measured along the optical axis of the catadioptric optical system 13. The airspace length L is illustrated as the measured largest distance between the exit surface 5 and the image sensor 17 along the optical axis of the catadioptric optical system 13. The gap length G is illustrated as the measured shortest distance between the solid body 1 and the image sensor 17. The total track length T is illustrated as the distance between the furthest point the solid body 1 and the image sensor 17. Thus, as can be seen from the figure, the sum of the gap length G and the thickness S of the solid body 1 equals the total track length T=S+G.

Further illustrated in Fig. 7 are the aperture obstruction diameter O, the full aperture diameter A, and the full element diameter E.

In a preferred embodiment, the thickness S of the solid body 1 is between 75% to 125% of a diagonal dimension D of the image sensor 17. In a more preferred embodiment, the thickness S of the solid body 1 is between 80% to 120% of a diagonal dimension D of the image sensor 17.

In another preferred embodiment, the airspace length L is between 80% to 120% of a diagonal dimension D of the image sensor 17. In a more preferred embodiment, the airspace length L is between 87.5% to 112.5% of a diagonal dimension D of the image sensor 17.

In a further preferred embodiment, wherein the catadioptric optical system 13 comprises an optical lens 12 arranged within the void 9, the airspace length L is approximately 82% of a diagonal dimension D of the image sensor 17.

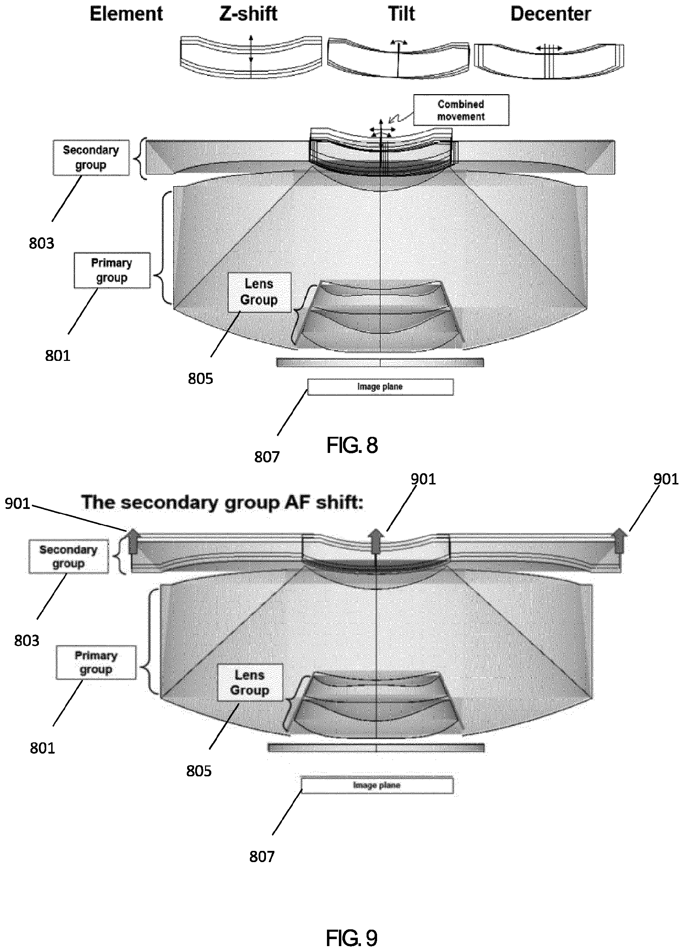

Figure 8 shows an embodiment of a catadioptric optical system according to the present disclosure. In the example of figure 8, one or more optical elements forming the catadioptric optical system can be moved or shifted to provide optical stabilization. There are three movements that may be applied, either in isolation or in some combination: z-shift, tilt, and decenter.

In the example of figure 8, three optical groups are depicted. A primary group 801, a secondary group 803 and a lens group 805. Each group comprises one or more optical components, such as optical material and lenses. One or more optical components of the primary group 801 form a primary reflective surface of the optical system. One or more optical components of the secondary group 803 form a secondary reflective surface of the optical system. The lens group 805 may be provided within the void defined by the inner wall (8) as described above. In an example, an optical component may comprise a lens element or a monolithic structure formed from an optical material.

According to an example, one or more of the primary group 801, secondary group 803 and lens group 805, or one or more components thereof, may be moved relative to the others (groups of components) in order to effect OIS and/or AF. It will be noted that collective movement of the primary group 801, secondary group 803 and lens group 805 constitutes movement of the catadioptric optical system as a whole, although in such a case, individual groups and/or individual optical component within groups may be moved by differing amounts. Thus, all movement types or combinations thereof may be applied to one optical element, a group of elements or the whole system.

Relative to the optical axis, A, Z-shift can be used to adjust a focus distance from a sensor located at the image plane 807. The tilt and decenter movements can be used to compensate for rotation and X-Y-shifts in exposure conditions.

A combined movement (comprising tilt, X-Y-shift forming decentering, and Z-shift) can be applied to an individual element or group position enabling optical image stabilization. In an example, if the optical element is shifted on rails along predefined paths, the motion is the combined movement of all 3 types.

Figure 9 shows an embodiment of a catadioptric optical system according to the present disclosure. In the example of figure 9, shift of the secondary group 803 is depicted. Movement of the secondary group 803 in this manner enables AF. As depicted by the arrows 901, the secondary group 803 (or one of more components from which the secondary group 803 is composed) can be z-shifted. As a result of this movement, an increased distance can be presented between the or each optical component of the secondary group 803 and the image plane 807 and thus an imaging sensor. If incoming ray beams are not collimated on both sides of the moving components of the secondary group 803, this shift moves the system focus distance in front of the system. If the incoming ray beams are collimated on one side of the moving components of the secondary group 803, the z-shift moves focus and adds a total length of the system as front (uppermost) element.

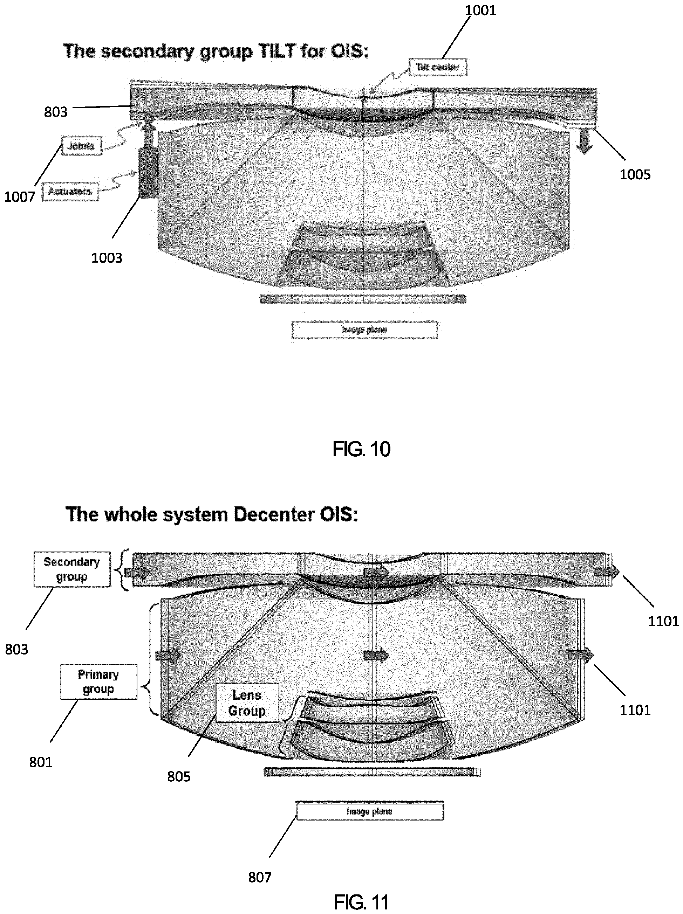

Figure 10 shows an embodiment of a catadioptric optical system according to the present disclosure. In the example of figure 10, tilt of the secondary group 803 is depicted. Movement of the secondary group 803 in this manner enables OIS.

In the example of figure 10, one or more optical elements of the secondary group 803 is tilted in order to compensate for angular rotation or wobbling of a device within which the system is implemented. The tilt center 1001 may be located on the axis of optical symmetry in or outside of the element or of the group or of the whole system. In an example, three linear actuators (one of which, 1003, is depicted in figure 10 for the sake of clarity) are located around the ring 1005 of the secondary group 803. These may be separated from one another around the ring 1005 by 120°. Joints 1007 that couple the secondary group 803 to the actuators are formed from flexible connections. In an example, linear actuator angular orientation with respect to optical axis of the system enable complex OIS movement, especially with path rails (not shown).

Figure 11 shows an embodiment of a catadioptric optical system according to the present disclosure. In the example of figure 11 OIS is implemented by way of lateral movement of the whole system, as depicted by arrows 1101. That is, if the objective or optical element or group in question are laterally shifted (decentered) in the X-Y-plane from the central axis (e.g., with respect to a sensor located in the image plane), unintentional or unwanted lateral system movement can be compensated for. In an example, the decentered objective system allows a larger image circle than the physical size of the sensor. Accordingly, at a limit of lateral movement, an image sensor is still able to generate image data. In some exemplary systems the secondary 803 and primary 801 groups may be able to move at different lateral speeds and/or in different directions for OIS compensation. The component movement may then follow projected mirror reflections naturally from angularly tilting scenery in a two mirror system.

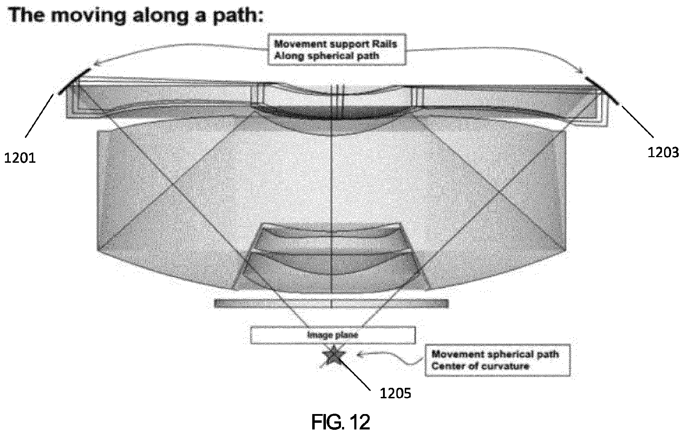

Figure 12 shows an embodiment of a catadioptric optical system according to the present disclosure. In the example of figure 12 the secondary group 803 is depicted in various states of motion along a path for OIS. The path is implemented, in the example of figure 12, using rails 1201, 1203, which are configured to constrain the motion of the secondary group 803 along the support rails 1201, 1203. In an example, three support rails can be provided positioned equidistant around the circumference of the secondary group 803 (similarly to the positioning of the linear actuators described above), and an optical component, group or the whole objective may be configured to move along the predefined path defined by the position of the support rails. Thus, as the element is pushed against the rails by, e.g., a spring load, the path follows the form of a spherical surface, when the element is x-y shifted. The actuators may be used to generate x-y-movement of the element or group. The forced lateral x-y-shift may then also additionally tilt and z-shift the component around the center of the point of curvature 1205. In an example, a support rail system z-shift may additionally be implemented for AF.

In the examples described above with reference to figures 8 to 12, movements, shifts and tilts of components or portions of components or group(s) can be implemented using one or more linear actuators. For example, with reference to the secondary group 803, several linear actuators may be provided in order to effect movement/shifts/tilts thereof. Similarly, linear actuators can be provided for the primary group 801 and/or the lens group 805 in order to enable movement/shift/tilt of those groups.

## EXEMPLARY EMBODIMENT

A specific exemplary embodiment according to the arrangements shown in Fig. 7 has been implemented as a prototype. The implementation parameters and details noted below are also applicable to arrangements as depicted in figures 8 to 12.

With reference to figure 7, a prototype was optimized for 2 focus distances: infinity and 1.5 m. The gap length G in this is exemplary embodiment can be adjusted by 0.485 mm steps between extreme focus distances. The image sensor diagonal D target is 4.2 mm. The z-height of the resulting system 13 is under 7 mm. The primary reflective surface 6 has the biggest diameter in the system and defines the element diameter as 10 mm.

All the optical surfaces in the prototype solid body 1 (lens) are optimized into odd-aspheric form by using maximum of $8^{th}$ order terms. The optimization error function has restrictions for sensor size, z-height, and element as well as airspace thicknesses and sizes. Targets were at image quality, ray angles to surfaces, transmission and distortion of the system. The resulting dimensions are summarized in the table below.

(Table 1)

| Lens configuration | | 1 | 2 |
|---|---|---|---|
| Object Distance | ~INF | 1500.00 mm | |
| Max Field | | 8.80 ° | 8.32 ° |
| Horizontal Field | 7.04 ° | 6.66 ° | |
| Focal length | | 28.10 mm | 28.10 mm |
| F-number | | 2.68 | 2.98 |
| Image circle diameter on sensor | 4.21 mn | 4.29 mm | |
| Total track (T) | 6.360 | 6.845 mm | |
| Full aperture diameter (A) | | 9.60 mm | 9.60 mm |
| Aperture obstrucion diameter (O) | | 4.80 mm | 4.80 mm |
| Total element diameter (E) | | 10 mm | 10 mm |
| Gap length (G) | 0.715 mm | 1.2 mm | |
| Solid body thickness (S) | | 5.645 mm | 5.645 mm |
| Image sensor diagonal (D) | | 4.20 mm | 4.20 mm |
| Fnro from aperture areas | | 3.81 | 3.81 |
| Relative illumination % | | >70 % | |

FORMULAS FOR THE ASPHERIC SURFACES

The optical surface basic asphericity can be described by standard, even or odd aspheric formulas. In the performance optimization all surfaces may use at least 2<sup>nd</sup> order aspheric parameters. Preferably more than 6<sup>th</sup> order aspheric parameters are needed to get the best performance with the higher order aberration correction. Similar surface forms can be obtained by aspherical surface types such as spline, nurbs, etc. However, adding too complex aspheric forms to lens surfaces may deteriorate the image quality by adding high spatial frequencies to surface forms and the lens distortion curves. The preferred formulas for the aspheric surfaces are given below.

The "sag" or z-coordinate of the *standard* surface is given by:

$$z = \frac{cr^2}{1 + \sqrt{1 - (1 + k)c^2 r^2}}$$

(1)

Wherein:

- c is the curvature (the reciprocal of the radius)
- r is the radial coordinate in lens units
- k is the conic constant

The *even asphere* surface model uses only the even powers of the radial coordinate with parameters $\alpha$ to describe the asphericity. The surface sag is given by:

$$z = \frac{cr^2}{1 + \sqrt{1 - (1 + k)c^2 r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

(2)

In the *odd asphere* surface model both even and odd powers with parameters $\beta$ of *r* are used. The sag is given by:

$$z = \frac{cr^2}{1 + \sqrt{1 - (1 + k)c^2 r^2}} + \beta_1 r^1 + \beta_2 r^2 + \beta_3 r^3 + \beta_4 r^4 + \beta_5 r^5 + \beta_6 r^6 + \beta_7 r^7 + \beta_8 r^8$$

(3)

The various aspects and implementations has been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

According to an example, any of the reflective, Mangin, or refractive optical surfaces/surface forms as described herein are not limited to Schmidt Cassegrain or Cassegrain surface forms (such as plate, spherical, parabolic or hyperbolic forms). All the surface forms of optical surfaces described herein may comprise higher order aspherical surfaces. For example, higher order aspherical surface forms (e.g., higher order aspherics than spherical or conic) that are optimized for compact size, aberration balancing and fabricability can be used.

While the method, apparatus, systems and related aspects have been described with reference to certain examples, various modifications, changes, omissions, and substitutions can be made without departing from the present disclosure. In particular, a component, feature or block from one example, embodiment, or aspect may be combined with or substituted by a feature/block of another example, embodiment, or aspect.

The features of any dependent claim may be combined with the features of any of the independent claims or other dependent claims.

The reference signs used in the claims shall not be construed as limiting the scope.

**Claims**

1. A catadioptric optical system (13) comprising:

   a solid body (1) of optical material, said solid body (1) comprising
   an annular entry surface (2);
   an annular first intermediary surface (3) located opposite to said entry surface (2);
   a second intermediary surface (4) being substantially continuous with the inner ring of said annular entry surface (2); and
   an exit surface (5) located opposite to said second intermediary surface (4); wherein the system comprises a primary reflective surface (6) and
   a secondary reflective surface (7); wherein
   said primary reflective surface (6) and said secondary reflective surface (7) being arranged so that a light ray entering the system through said entry surface (2) is folded at least two times before exiting through said exit surface (5); and wherein
   said exit surface (5) is connected to said first intermediary surface (3) by an inner wall (8) extending towards said second intermediary surface (4), thereby defining a void (9) inside said solid body (1), wherein,
   wherein the primary reflective surface (6) and the secondary reflective surface (7) are separated from the solid body (1) and arranged as floating elements, and
   at least one portion of a) the primary reflective surface (6), b) the secondary reflective surface (7) and c) an additional optical lens (12) arranged within said void (9) are configured to be moved relative to an optical axis of the system.

2. The system according to claim 1, wherein said entry surface (2) is an annular refractive surface of revolution arranged coaxially with the optical axis of the system.

3. The system according to any one of claims 1 or 2, wherein said first intermediary surface (3) is an annular, concave surface of revolution arranged coaxially with the optical axis of the system.

4. The system according to any one of claims 1 to 3, wherein said second intermediary surface (4) is a circular, convex surface of revolution arranged coaxially with the optical axis of the system.

5. The system according to any one of claims 1 to 4, wherein said primary reflective surface (6) is an annular, concave surface of revolution, with a curvature substantially corresponding to the curvature of said first intermediary surface (3), arranged coaxially with the optical axis of the system.

6. The system according to any one of claims 1 to 5, wherein said secondary reflective surface (7) is a circular, convex surface of revolution, with a curvature substantially corresponding to the curvature of said second intermediary surface (4), arranged coaxially with the optical axis of the system.

7. The system according to any one of claims 1 to 6, wherein at least one of said first intermediary surface (3) or said second intermediary surface (4) is a refractive surface.

8. The system according to any one of claims 1 to 7, further comprising a circular Mangin mirror (10) arranged after the second intermediary surface (4) in said light ray path, said Mangin mirror (10) comprising said secondary reflective surface (7) and a third intermediary surface (11), said third intermediary surface (11) being a convex, refractive surface of revolution, and said secondary reflective surface (7) being a reflective coating (7C) on the rear side of said third intermediary surface (11) with respect to said light ray path.

9. An electronic device (14) comprising:

   a housing (15);
   a catadioptric optical system (13) according to any one of claims 1 to 8 arranged within said housing (15);
   wherein said housing (15) further comprises an aperture (16) arranged within a wall of said housing (15) so as to allow light rays from an object enter the catadioptric optical system (13); and wherein
   said device (14) further comprises an image sensor (17) arranged to be able to receive light rays exiting said catadioptric optical system (13).

10. An electronic device (14) according to claim 9, wherein a thickness (S) of said solid body (1), defined as the maximum length of the solid body (1) measured along the optical axis of the catadioptric optical system (13), is between 75% to 125% of a diagonal dimension (D) of said image sensor (17), more preferably between 80% to 120% of the diagonal dimension (D) of said image sensor (17).

11. An electronic device (14) according to any one of claims 9 or 10, wherein the distance (L) between said exit surface (5) and said image sensor (17), measured along the optical axis of the catadioptric optical system (13), is between 80% to 120% of a diagonal dimension (D) of said image sensor (17), more preferably between 87.5% to 112.5% of a diagonal dimension (D) of said image sensor (17).

12. An electronic device (14) according to any one of claims 9 to 11, wherein said catadioptric optical system (13) comprises an optical lens (12) arranged within said void (9), and wherein the distance (L) between said exit surface (5) and said image sensor (17), measured along the optical axis of the catadioptric optical system (13), is approximately 82% of a diagonal dimension (D) of said image sensor (17).

13. A method for optical image stabilization in a catadioptric optical system (13) according to any one of claims 1 to 6, the method comprising at least one of:

   laterally moving at least one of the primary reflective surface, the secondary reflective surface and the additional optical lens relative to the optical axis of the system; and
   shifting at least one of the primary reflective surface, the secondary reflective surface and the additional optical lens parallel to the optical axis of the system; and
   tilting at least one of the primary reflective surface, the secondary reflective surface and the additional optical lens with respect to the optical axis of the system.


**Patentansprüche**

1. Katadioptrisches optisches System (13), umfassend:
   einen Festkörper (1) aus optischem Material, wobei der Festkörper (1) umfasst:

   eine kranzförmige Eintrittsfläche (2);
   eine kranzförmige erste Zwischenfläche (3), die sich gegenüber der Eintrittsfläche (2) befindet;
   eine zweite Zwischenfläche (4), die im Wesentlichen kontinuierlich mit dem Innenring der kranzförmigen Eintrittsfläche (2) ist; und
   eine Austrittsfläche (5), die sich gegenüber der zweiten Zwischenfläche (4) befindet;
   wobei das System umfasst:

   eine primäre Reflexionsfläche (6) und
   eine sekundäre Reflexionsfläche (7); wobei
   die primäre Reflexionsfläche (6) und die sekundäre Reflexionsfläche (7) so angeordnet sind, dass ein Lichtstrahl, der durch die Eintrittsfläche (2) in das System eintritt, mindestens zwei Mal gefaltet wird, bevor er durch die Austrittsfläche (5) austritt; und wobei
   die Austrittsfläche (5) durch eine Innenwand (8), die sich in Richtung der zweiten Zwischenfläche (4) erstreckt, mit der ersten Zwischenfläche (3) verbunden ist, wodurch ein Leerraum (9) innerhalb des Festkörpers (1) definiert wird, wobei
   die primäre Reflexionsfläche (6) und die sekundäre Reflexionsfläche (7) von dem Festkörper (1) getrennt und als schwebende Elemente angeordnet sind, und
   mindestens ein Anteil von a) der primären Reflexionsfläche (6), b) der sekundären Reflexionsfläche (7) und c) einer zusätzlichen optischen Linse (12), die innerhalb des Leerraums (9) angeordnet ist, ausgestaltet sind, um relativ zu einer optischen Achse des Systems bewegt zu werden.

2. System nach Anspruch 1, wobei die Eintrittsfläche (2) eine kranzförmige refraktive Rotationsfläche ist, die koaxial mit der optischen Achse des Systems angeordnet ist.

3. System nach einem der Ansprüche 1 oder 2, wobei die erste Zwischenfläche (3) eine kranzförmige konkave Rotationsfläche ist, die koaxial mit der optischen Achse des Systems angeordnet ist.

4. System nach einem der Ansprüche 1 bis 3, wobei die zweite Zwischenfläche (4) eine runde konvexe Rotationsfläche ist, die koaxial mit der optischen Achse des Systems angeordnet ist.

5. System nach einem der Ansprüche 1 bis 4, wobei die primäre Reflexionsfläche (6) eine kranzförmige konkave Rotationsfläche mit einer Krümmung ist, die im Wesentlichen der Krümmung der ersten Zwischenfläche (3) entspricht, und koaxial mit der optischen Achse des Systems angeordnet ist.

6. System nach einem der Ansprüche 1 bis 5, wobei die sekundäre Reflexionsfläche (7) eine runde konvexe Rotationsfläche mit einer Krümmung ist, die im Wesentlichen der Krümmung der zweiten Zwischenfläche (4) entspricht, und koaxial mit der optischen Achse des Systems angeordnet ist.

7. System nach einem der Ansprüche 1 bis 6, wobei mindestens eine von der ersten Zwischenfläche (3) oder der zweiten Zwischenfläche (4) eine refraktive Fläche ist.

8. System nach einem der Ansprüche 1 bis 7, des Weiteren umfassend einen runden Mangin-Spiegel (10), der nach der zweiten Zwischenfläche (4) in dem Lichtstrahlpfad angeordnet ist, wobei der Mangin-Spiegel (10) die sekundäre Reflexionsfläche (7) und eine dritte Zwischenfläche (11) umfasst, wobei die dritte Zwischenfläche (11) eine konvexe refraktive Rotationsfläche ist, und die sekundäre Reflexionsfläche (7) eine Reflexionsbeschichtung (7C) auf der Rückseite der dritten Zwischenfläche (11) in Bezug zu dem Lichtstrahlpfad ist.

9. Elektronische Vorrichtung (14), umfassend:

ein Gehäuse (15);
ein katadioptrisches optisches System (13) nach einem der Ansprüche 1 bis 8, das innerhalb des Gehäuses (15) angeordnet ist;
wobei das Gehäuse (15) des Weiteren eine Blende (16) umfasst, die innerhalb einer Wand des Gehäuses (15) angeordnet ist, damit Lichtstrahlen von einem Objekt in das katadioptrische optische System (13) eintreten können; und wobei
die Vorrichtung (14) des Weiteren einen Bildsensor (17) umfasst, der so angeordnet ist, dass er in der Lage ist, Lichtstrahlen zu empfangen, die aus dem katadioptrischen optischen System (13) austreten.

10. Elektronische Vorrichtung (14) nach Anspruch 9, wobei eine Dicke (S) des Festkörpers (1), definiert als die Maximallänge des Festkörpers (1), gemessen entlang der optischen Achse des katadioptrischen optischen Systems (13), zwischen 75 % und 125 % einer Diagonalabmessung (D) des Bildsensors (17), bevorzugter zwischen 80 % und 120 % der Diagonalabmessung (D) des Bildsensors (17) beträgt.

11. Elektronische Vorrichtung (14) nach einem der Ansprüche 9 oder 10, wobei der Abstand (L) zwischen der Austrittsfläche (5) und dem Bildsensor (17), gemessen entlang der optischen Achse des katadioptrischen optischen Systems (13), zwischen 80 % und 120 % einer Diagonalabmessung (D) des Bildsensors (17), bevorzugter zwischen 87,5 % und 112,5 % einer Diagonalabmessung (D) des Bildsensors (17) beträgt.

12. Elektronische Vorrichtung (14) nach einem der Ansprüche 9 bis 11, wobei das katadioptrische optische System (13) eine optische Linse (12) umfasst, die innerhalb des Leerraums (9) angeordnet ist, und wobei der Abstand (L) zwischen der Austrittsfläche (5) und dem Bildsensor (17), gemessen entlang der optischen Achse des katadioptrischen optischen Systems (13), annähernd 82 % einer Diagonalabmessung (D) des Bildsensors (17) beträgt.

13. Verfahren zur optischen Bildstabilisierung in einem katadioptrischen optischen System (13) nach einem der Ansprüche 1 bis 6, wobei das Verfahren mindestens eines der folgenden umfasst:

laterales Bewegen von mindestens einer von der primären Reflexionsfläche, der sekundären Reflexionsfläche und der zusätzlichen optischen Linse relativ zu der optischen Achse des Systems; und
Verschieben von mindestens einer von der primären Reflexionsfläche, der sekundären Reflexionsfläche und der zusätzlichen optischen Linse parallel zu der optischen Achse des Systems; und
Kippen von mindestens einer von der primären Reflexionsfläche, der sekundären Reflexionsfläche und der zusätzlichen optischen Linse in Bezug zu der optischen Achse des Systems.

**Revendications**

1. Système optique catadioptrique (13) comprenant :
   un corps solide (1) en matériau optique, ledit corps solide (1) comprenant :

   une surface d'entrée annulaire (2) ;
   une première surface intermédiaire annulaire (3) située à l'opposé de ladite surface d'entrée (2) ;
   une deuxième surface intermédiaire (4) qui est sensiblement continue avec l'anneau intérieur de ladite surface d'entrée annulaire (2) ; et
   une surface de sortie (5) située à l'opposé de ladite deuxième surface intermédiaire (4) ; le système comprenant :

   une surface réfléchissante primaire (6) et
   une surface réfléchissante secondaire (7) ;
   ladite surface réfléchissante primaire (6) et ladite surface réfléchissante secondaire (7) étant agencées de sorte qu'un rayon lumineux entrant dans le système à travers ladite surface d'entrée (2) soit replié au moins deux fois avant de sortir par ladite surface de sortie (5) ; et
   ladite surface de sortie (5) étant reliée à ladite première surface intermédiaire (3) par une paroi interne (8) s'étendant vers ladite deuxième surface intermédiaire (4), définissant ainsi un vide (9) à l'intérieur dudit corps solide (1),
   la surface réfléchissante primaire (6) et la surface réfléchissante secondaire (7) étant séparées du corps solide (1) et agencées comme des éléments flottants, et
   au moins une partie de a) la surface réfléchissante primaire (6), b) la surface réfléchissante secondaire (7) et c) une lentille optique additionnelle (12) agencées dans ledit vide (9) étant configurées pour être déplacées par rapport à un axe optique du système.

2. Système selon la revendication 1, ladite surface d'entrée (2) étant une surface de révolution réfractive annulaire agencée de manière coaxiale avec l'axe optique du système.

3. Système selon l'une quelconque des revendications 1 ou 2, ladite première surface intermédiaire (3) étant une surface de révolution annulaire concave agencée de manière coaxiale avec l'axe optique du système.

4. Système selon l'une quelconque des revendications 1 à 3, ladite deuxième surface intermédiaire (4) étant une surface de révolution circulaire convexe agencée de manière coaxiale avec l'axe optique du système.

5. Système selon l'une quelconque des revendications 1 à 4, ladite surface réfléchissante primaire (6) étant une surface de révolution annulaire concave, ayant une courbure correspondant sensiblement à la courbure de ladite première surface intermédiaire (3), agencée de manière coaxiale avec l'axe optique du système.

6. Système selon l'une quelconque des revendications 1 à 5, ladite surface réfléchissante secondaire (7) étant une surface de révolution circulaire convexe, ayant une courbure correspondant sensiblement à la courbure de ladite deuxième surface intermédiaire (4), agencée de manière coaxiale avec l'axe optique du système.

7. Système selon l'une quelconque des revendications 1 à 6, au moins l'une de ladite première surface intermédiaire (3) ou de ladite deuxième surface intermédiaire (4) étant une surface réfractive.

8. Système selon l'une quelconque des revendications 1 à 7, comprenant en outre un miroir de Mangin circulaire (10) agencé après la deuxième surface intermédiaire (4) dans ledit trajet du rayon lumineux, ledit miroir de Mangin (10) comprenant ladite surface réfléchissante secondaire (7) et une troisième surface intermédiaire (11), ladite troisième surface intermédiaire (11) étant une surface de révolution réfractive convexe, et ladite surface réfléchissante secondaire (7) étant un revêtement réfléchissant (7C) sur la face arrière de ladite troisième surface intermédiaire (11) par rapport audit trajet du rayon lumineux.

9. Dispositif électronique (14) comprenant :

   un boîtier (15) ;
   un système optique catadioptrique (13) selon l'une quelconque des revendications 1 à 8, agencé à l'intérieur dudit boîtier (15) ;
   ledit boîtier (15) comprenant en outre une ouverture (16) agencée dans une paroi dudit boîtier (15) de manière à permettre aux rayons lumineux provenant d'un objet d'entrer dans le système optique catadioptrique (13) ; et ledit dispositif (14) comprenant en outre un capteur d'image (17) agencé pour pouvoir recevoir les rayons lumineux sortant dudit système optique catadioptrique (13).

10. Dispositif électronique (14) selon la revendication 9, une épaisseur (S) dudit corps solide (1), définie comme la longueur maximale du corps solide (1) mesurée le long de l'axe optique du système optique catadioptrique (13), étant comprise entre 75 % et 125 % d'une dimension diagonale (D) dudit capteur d'image (17), de préférence entre 80 % et 120 % de la dimension diagonale (D) dudit capteur d'image (17).

11. Dispositif électronique (14) selon l'une quelconque des revendications 9 ou 10, la distance (L) entre ladite surface de sortie (5) et ledit capteur d'image (17), mesurée le long de l'axe optique du système optique catadioptrique (13), étant comprise entre 80 % et 120 % d'une dimension diagonale (D) dudit capteur d'image (17), de préférence entre 87,5 % et 112,5 % d'une dimension diagonale (D) dudit capteur d'image (17).

12. Dispositif électronique (14) selon l'une quelconque des revendications 9 à 11, ledit système optique catadioptrique (13) comprenant une lentille optique (12) agencée dans ledit vide (9), et la distance (L) entre ladite surface de sortie (5) et ledit capteur d'image (17), mesurée le long de l'axe optique du système optique catadioptrique (13), étant approximativement égale à 82 % d'une dimension diagonale (D) dudit capteur d'image (17).

13. Procédé de stabilisation d'image optique dans un système optique catadioptrique (13) selon l'une quelconque des revendications 1 à 6, le procédé comprenant au moins l'une des opérations suivantes :

le déplacement latéral d'au moins l'une parmi la surface réfléchissante primaire, la surface réfléchissante secondaire et la lentille optique additionnelle par rapport à l'axe optique du système ; et
le décalage d'au moins l'une parmi la surface réfléchissante primaire, la surface réfléchissante secondaire et la lentille optique additionnelle parallèlement à l'axe optique du système ; et
l'inclinaison d'au moins l'une parmi la surface réfléchissante primaire, la surface réfléchissante secondaire et la lentille optique additionnelle par rapport à l'axe optique du système.

FIG. 1

FIG. 2

FIG. 3

FIG. 4

FIG. 5

FIG. 6

FIG. 7

FIG. 8

FIG. 9

The secondary group TILT for OIS:

FIG. 10

The whole system Decenter OIS:

FIG. 11

# The moving along a path:

FIG. 12

**EP 4 010 745 B1**

**Patent documents cited in the description**

- US 20160187631 A1
- US 20180252905 A1
- US 9933604 B1